(19) Europäisches Patentamt
European Patent Office
Office européen des brevets

(11) Veröffentlichungsnummer: **0 374 657 A2**

# (12) EUROPÄISCHE PATENTANMELDUNG

(21) Anmeldenummer: 89122776.1

(51) Int. Cl.5: C08G 63/60

(22) Anmeldetag: 09.12.89

(30) Priorität: 23.12.88 DE 3843559
24.04.89 DE 3913403

(43) Veröffentlichungstag der Anmeldung: 27.06.90 Patentblatt 90/26

(84) Benannte Vertragsstaaten: BE CH DE ES FR GB IT LI NL

(71) Anmelder: BAYER AG

D-5090 Leverkusen 1 Bayerwerk(DE)

(72) Erfinder: Pakull, Ralf, Dr.
Neue-Linner-Strasse 75
D-4150 Krefeld(DE)
Erfinder: Freitag, Dieter, Dr.
Hasenheide 10
D-4150 Krefeld 1(DE)
Erfinder: Eckhard, Volker, Dr.
Bodelschwinghstrasse 14
D-4150 Krefeld(DE)
Erfinder: Idel, Karsten-Josef, Dr.
Am Schwarzkamp 38
D-4150 Krefeld(DE)
Erfinder: Westeppe, Uwe, Dr.
Vogelskamp 72
D-4020 Mettmann(DE)

## (54) Neue thermotrope Polyester, Verfahren zu ihrer Herstellung sowie ihre Verwendung zur Herstellung von Formkörpern, Filamenten, Fasern und Folien.

(57) Die neuen thermotropen Polyester mit wiederkehrenden Struktureinheiten der Formeln

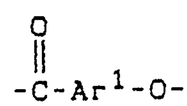 ,

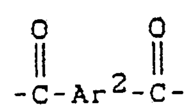 ,

$$-O-Ar^3-O-$$

und

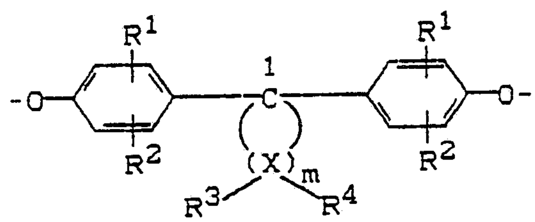 .

besitzen ausgezeichnete mechanische Eigenschaften und eine gute Verarbeitbarkeit. Sie lassen sich in



Xerox Copy Centre

üblicher Weise zur Herstellung von Formkörpern, Filamenten, Fasern und Folien verwenden.

# Neue thermotrope Polyester, Verfahren zu ihrer Herstellung sowie ihre Verwendung zur Herstellung von Formkörpern, Filamenten, Fasern und Folien

Die vorliegende Erfindung betrifft hochmolekulare, thermotrope Polyester mit ausgezeichneten mechanischen Eigenschaften und guter Verarbeitbarkeit, ein Verfahren zu ihrer Herstellung sowie ihre Verwendung zur Herstellung von Formkörpern, Filamenten, Fasern und Folien.

Als "thermotrop" bezeichnet man solche Substanzen, die flüssigkristalline Schmelze bilden. Thermotrope Polyester sind bereits bekannt. Eine Literaturzusammenfassung befindet sich beispielsweise in der DE-OS 33 25 787 und EP-OS 134 959. Dort wird auch eine Untersuchung des flüssig-kristallinen Zustandes der Polymerschmelzen beschrieben.

Aus thermotropen Polyestern lassen sich durch thermoplastische Verformung Formkörper aller Art und Folien sowie durch Verspinnen aus der Schmelze Filamente und Fasern mit außergewöhnlichen mechanischen Eigenschaften herstellen. Voraussetzung ist jedoch, daß die Polyester sich in der Schmelze gut verarbeiten lassen, z.B. daß sie sich ohne Zersetzung schmelzen lassen.

Die einfachsten vollaromatischen Polyester, wie Poly(4-hydroxybenzoat) und Poly(1,4-phenylenterephthalat) erfüllen diese Voraussetzung nicht. Sie schmelzen unter Zersetzung erst bei 600 °C.

In der EP-A 88 742 werden hochmolekulare Polyester auf der Basis von 4-Hydroxybenzoesäure, Isophthalsäure, Hydrochinon und geringen Anteilen (< 5 Mol-%) 2,2-Bis-(4-hydroxyphenyl)propan beschrieben. Aufgrund der verwendeten Komponenten zeigen diese Polyester thermotrope Eigenschaften. Sie weisen im Vergleich zu Polyestern auf der Basis von 4-Hydroxybenzoesäure, Isophthalsäure und Hydrochinon eine um 60 bis 80 °C höhere Glasübergangstemperatur auf und zeigen damit eine verbesserte Wärmeformbeständigkeit. Nachteilig ist, daß bei Gehalten von mehr als 5 Mol-% an 2,2-Bis-(4-hydroxyphenyl)-propan der flüssigkristalline Charakter dieser Polyester verlorengeht.

Aufgabe der vorliegenden Erfindung ist es daher, thermotrope Polyester mit hohen Glasübergangstemperaturen und einer hohen Wärmeformbeständigkeit bei gleichzeitig niedrigen Schmelzpunkten und damit guter Verarbeitbarkeit unter Beibehaltung der für flüssigkristalline Materialien bekannten guten mechanischen Eigenschaften bereitzustellen.

Es wurde nun gefunden, daß thermotrope Polyester mit einkondensierten Resten von neuen Bisphenolen, diese gewünschte Kombination vorteilhafter Eigenschaften aufweisen

Gegenstand der Erfindung sind daher thermotrope aromatische Polyester mit wiederkehrenden Einheiten der Formel

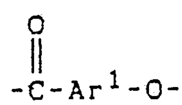 (I),

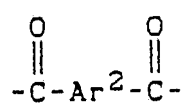 (II),

$-O-Ar^3-O-$ (III)

und

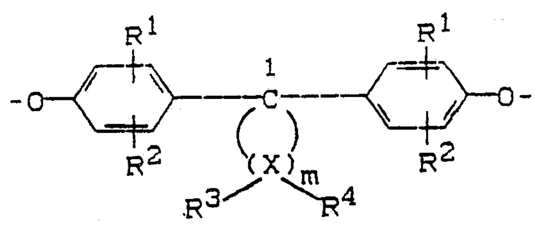 (IV),

worin

$Ar^1$, $Ar^2$ und $Ar^3$ bivalente aromatische Reste mit 6 bis 18 C-Atomen darstellen, wobei diese Reste durch 1 bis 4 $C_1$-$C_4$-Alkylgruppen, vorzugsweise Methyl, 1 bis 4 $C_1$-$C_4$-Alkoxygruppen, vorzugsweise Methoxy, und/oder durch 1 bis 4 Halogenatome, bevorzugt Chlor oder Brom, substituiert sein können und

$R^1$ und $R^2$ unabhängig voneinander für Wasserstoff, Halogen, bevorzugt Chlor und Brom, $C_1$-$C_8$-Alkyl,

bevorzugt Methyl, Ethyl, Propyl und Butyl, $C_5$-$C_6$-Cycloalkyl, bevorzugt Cyclohexyl, $C_6$-$C_{10}$-Aryl, bevorzugt Phenyl und Naphthyl, und $C_7$-$C_{12}$-Aralkyl, bevorzugt Benzyl, stehen,

m eine ganze Zahl von 4 bis 7, bevorzugt 4 und 5 darstellt,

$R^3$ und $R^4$ für jedes X individuell wählbar sind und unabhängig voneinander Wasserstoff oder $C_1$-$C_6$-Alkyl bedeuten und

X für Kohlenstoff steht,

mit der Maßgabe, daß mindestens ein Ringkohlenstoffatom gleichzeitig durch zwei $C_1$-$C_6$-Alkylreste substituiert ist, wobei das Molverhältnis der wiederkehrenden Einheiten (I):(II) 20 bis 85 : 80 bis 15, vorzugsweise 50 bis 80 : 20 bis 50, das Molverhältnis (II):(III) und (IV) 1 bis 0,95 : 1 bis 1,05, vorzugsweise 1 bis 0,98 : 1 bis 1,02, insbesondere 1,0 : 1,0, und das Molverhältnis (III):(IV) 20 bis 98 : 80 bis 2, vorzugsweise 25 bis 95 : 75 bis 5, insbesondere 30 bis 70 : 70 bis 30 beträgt.

Die Struktureinheiten der Formel (IV) leiten sich insbesondere von folgenden Dihydroxydiphenylcycloalkanen ab (siehe beispielsweise die Formeln (V) bis (VII)):

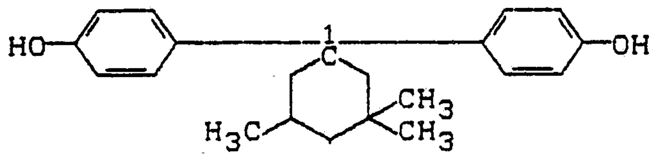

(V)

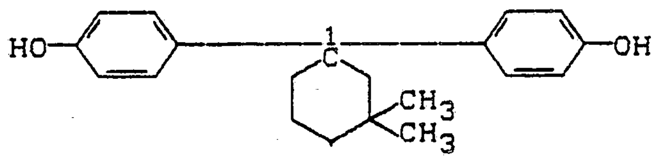

(VI)

und

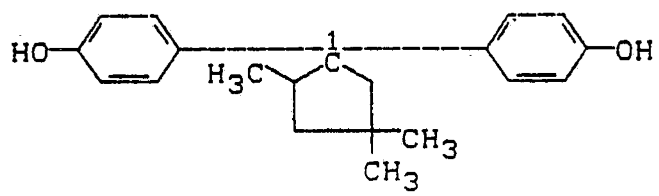

(VII).

Weiterhin wird genannt 1,1-Bis-(4-hydroxyphenyl)-3,3-dimethylcyclopentan.

Die der Struktureinheiten (IV) zugrundeliegenden Dihydroxydiphenylcycloalkane können hergestellt werden durch Kondensation in an sich bekannter Weise der entsprechenden Phenole mit den entsprechenden Ketonen in Gegenwart von sauren Katalysatoren sowie gegebenenfalls weiteren Cokatalysatoren. Verwiesen wird in diesem Zusammenhang auf die deutsche Patentanmeldung P 38 32 396.6 und auf Schnell, Chemistry and Physics of Polycarbonates, Interscience Publishers, New York 1964.

Hydroxycarbonsäuren, die zu Einheiten der Formel (I) führen, sind beispielsweise 4-Hydroxybenzoesäure, 6-Hydroxy-2-naphthoesäure, 4-Hydroxy-1-naphthoesäure, 5-Hydroxy-1-naphthoesäure, 4′-Hydroxy-4-biphenylcarbonsäure, 4-Hydroxy-trans-zimtsäure, 3-Chlor-4-hydroxybenzoesäure, 3-Methyl-4-hydroxybenzoesäure, 3-Phenyl-4-hydroxybenzoesäure, 3-Methoxy-4-hydroxybenzoesäure und/oder 3-Methoxy-4-hydroxyzimtsäure. Bevorzugt ist 4-Hydroxybenzoesäure.

Aromatische Dicarbonsäuren, die zu Einheiten der Formel (II) führen, sind beispielsweise Isophthalsäure, Terephthalsäure, 2,6-Naphthalindicarbonsäure, 1,4-Naphthalindicarbonsäure, 1,5-Naphthalindicarbonsäure, 4,4′-Biphenyldicarbonsäure, 4,4″-Terphenyldicarbonsäure, 4,4′-trans-Stilbendicarbonsäure, 4,4′-Tolandicarbonsäure, 4,4′-Azobenzoldicarbonsäure, Methylterephthalsäure, Chlorterephthalsäure, Phenylterephthalsäure, Methylisoterephthalsäure, Chlorisoterephthalsäure und/oder Phenylisoterephthalsäure. Bevorzugt sind Terephthalsäure und/oder Isophthalsäure.

Diphenole, die zu Einheiten der Formel (III) führen, sind beispielsweise Hydrochinon, Resorcin, 4,4′-Dihydroxydiphenyl, 4,4′-Dihydroxydiphenylether, 4,4′-Dihydroxydiphenylsulfid und/oder 4,4′-Dihydroxybenzophenon. Bevorzugt sind Hydrochinon und/oder 4,4′-Dihydroxydiphenyl.

Als besonders bevorzugtes Diphenol der allgemeinen Formel (IV) wird genannt: 1,1-Bis-(4-hydroxyphenyl)-3,3,5-trimethylcyclohexan.

Die erfindungsgemäßen Polyester können Mischungen der oben beschriebenen sich wiederholenden Einheiten der Formel (IV) enthalten; bevorzugt sind jedoch solche Polyester die nur eine der genannten Komponenten enthalten.

Bei der Verwendung von Hydroxycarbonsäuren, Dicarbonsäuren und Diphenolen, die zu den Resten $Ar^1$, $Ar^2$ bzw. $Ar^3$ führen, deren kettenverlängernde Bindungen gewinkelt sind, wird man eine Menge nicht überschreiten, die die thermotropen Eigenschaften der resultierenden Polyester verlorengehen läßt.

Als Endgruppen können die erfindungsgemäßen Polyester -COOH, OH, $-OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4′(1,1,3,3-Tetramethylbutyl ) -phenol sowie ß-Naphthol, und aromatische Monocarbonsäuren, wie Benzoesäure, Diphenylcarbonsäuren und Naphthalincarbonsäuren. Die Kettenabbrecher können in Mengen von etwa 0,5 bis 5 Mol-%, bei Monohydroxylverbindungen bezogen auf Diphenole, bei Monocarbonsäuren bezogen auf Dicarbonsäuren, eingesetzt werden.

Es können auch verzweigte drei- oder höherfunktionelle - vorzugsweise aromatische - Monomere in Mengen von etwa 0,1 bis 1 Mol-%, bezogen auf die Summe der Komponenten I und II, wie Phloroglucin, 1,3,5-Benzoltricarbonsäure und/oder 3,5-Dihydroxybenzoesäure, eingesetzt werden.

Die erfindungsgemäßen Polyester können bis zu 10 Mol-% Carbonatgruppen, bezogen auf die Summe von Ester- und Carbonatgruppen enthalten,

Die erfindungsgemäßen Polyester können die Reste I bis IV in statistischer Verteilung, in Segmenten oder in Blöcken enthalten. Bei der Komponente I ist darauf zu achten, daß längere Blöcke den Schmelzpunkt und die Viskosität der Polyester stark erhöhen können.

Die Schmelzviskosität der erfindungsgemäßen Polyester, gemessen jeweils oberhalb der durch DSC bestimmten Übergangstemperatur von der kristallinen in die flüssigkristalline Phase (üblicherweise zwischen 200 und 350 °C) unter Verwendung einer Düse mit einer Länge/Durchmesser-Verhältnis von 20 bei einer Schergeschwindigkeit von $10^3 s^{-1}$, beträgt in der Regel 2 bis 2000, vorzugsweise 5 bis 1000, insbesondere 10 bis 500 Pas,

Die erfindungsgemäßen Polyester können durch Umsetzung der Diphenole oder ihrer reaktionsfähigen Derivate, z.B. ihrer $C_1$- bis $C_3$-Acylderivate, mit den Dicarbonsäuren oder ihren reaktionsfähigen Derivaten, z.B. ihren Diestern oder Dihalogeniden, gegebenenfalls in Gegenwart von Verzweigungsmitteln, Kettenabbrechern und/oder Katalysatoren, nach verschiedenen Verfahren hergestellt werden.

Bevorzugtes Syntheseverfahren ist die Umsetzung der Phenylester, die auch in situ erzeugt werden können, der aromatischen Carbonsäuren mit den Diphenolen bei Temperaturen von etwa 160 bis 400 °C unter Verwendung eines für solche Reaktionen üblichen Katalysators, gegebenenfalls unter vermindertem Druck.

Carbonatgruppen können durch Verwendung von Diphenylcarbonat eingeführt werden.

Die erfindungsgemäßen Polyester können bei Temperaturen von etwa 160 bis 400 °C hergestellt werden, wobei man im allgemeinen die Reaktion bei niedriger Temperatur beginnt und im Verlaufe des Reaktionsfortschritts kontinuierlich die Temperatur erhöht. Bei nachlassender Reaktionsgeschwindigkeit kann ein Vakuum angelegt werden, wobei der Druck vorzugsweise von Normaldruck bis auf ca. 0,1 mbar gesenkt wird.

Das erhaltene Produkt kann einer Festphasennachkondensation - vorzugsweise unter vermindertem Druck - bei einer Temperatur von 220 bis 380 °C unterworfen werden. Nach etwa 2 bis 25 Stunden hat sich das Molekulargewicht deutlich erhöht, und damit besitzt resultierende Polyester weiter verbesserte Eigenschaften.

Die Ausgangsverbindungen werden in der Regel in solchen Mengen eingesetzt, daß Carboxyl- zu Hydroxyfunktionen in einem Verhältnis von 1:0,95 bis 1,05, vorzugsweise 1:0,98 bis 1,02, besonders bevorzugt 1:1 stehen.

Die Reaktionen können in der Schmelze oder in inerten hochsiedenden Lösungsmitteln durchgeführt werden.

Die Katalysatoren für die Polykondensation sind bekannt und beispielsweise beschrieben in DE-OS 3 535 452 und EP-OS 221 316.

Bevorzugt werden als Katalysatoren für die Polykondensationsreaktion verwendet Magnesium-, Mangan-, Natrium-, Kalium und/oder Zinkacetat, Titantetrabutylat, Titantetrapropylat sowie Natriumphenolat. Die Katalysatormengen betragen etwa 0,001 bis 1 Gew.-%, besonders bevorzugt 0,01 bis 0,2 Gew.-%, bezogen auf das Gesamtgewicht der eingesetzten Monomerbausteine.

Die erfindungsgemäßen thermotropen Polyester können infolge ihrer relativ geringen Schmelzviskosität thermoplastisch zu Spritzgußteilen, Filamenten, Fasern, Bändern und Filmen verarbeitet werden. Durch bei der Verarbeitung auftretende Scherkräfte wird eine Molekülorientierung erzielt, die in hohem Maße von der

Stärke dieser Kräfte beeinflußt wird. Desweiteren zeigen sie eine ausgeprägte Strukturviskosität. d.h. das die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile hoher Zugfestigkeit, hoher Wärmeformbeständigkeit und großer Dimensionsstabilität hergestellt werden. Da die erfindungsgemäßen Polyester außerordentlich chemikalienresistent sind, eignen sie sich bevorzugt zur Herstellung von:

- elektrotechnischen Artikeln, wie Isolatoren, gedruckten Schaltungen, Steckkontakten, Armaturenteilen und Umhüllungen von integrierten Schaltungen,
- Teilen chemisch-technischer Apparate, wie Rohren, Behälterauskleidungen, Rotoren, Gleitlagern und Dichtungen,
- Teilen der Flugzeuginnenausstattung,
- Teilen medizinisch-technischer Geräte.

Die erfindungsgemäßen Polyester können aber auch als Überzugs- und Beschichtungsmaterial - pulverförmig oder dispergiert - verwendet werden. Auch zur Herstellung verstärkter oder gefüllter Formmassen mit einem Verstärkungs- bzw. Füllstoffgehalt von etwa 5 bis 65 Gew.-%, bezogen auf verstärkte oder gefüllte Formmasse, sind sie bestens geeignet.

Weiterer Gegenstand der Erfindung ist also die Verwendung der neuen thermotropen Polyester zur Herstellung von Formkörpern, Filamenten, Fasern und Filmen.

## Beispiele

Die Prozentangaben der nachfolgenden Beispiele beziehen sich jeweils auf das Gewicht.

Die Prüfung der Kerbschlagzähigkeit (ak) erfolgte an Normkleinstäben gemäß DIN 53 453 (ISO/R 179) bei 23 °C jeweils an 10 Prüfkörpern. Der Zug-E-Modul wurde gemäß DIN 53 455 (ISO/R 527) gemessen.

### Beispiel 1

In eine mit Stickstoff gespülte und ausgeheizte Schmelzkondensationsapparatur, bestehend aus einem 1 l-Planschliffgefäß mit Planschliffdeckel; Rührer, Stickstoffeinleitung und Destillationsaufsatz, wurden folgende Substanzen eingewogen:

220,17 g = 1,59 Mol p-Hydroxybenzoesäure
63,60 g = 0,34 Mol 4,4′-Dihydroxydiphenyl
106,04 g = 0,34 Mol 1,1-Bis(4-hydroxyphenyl)-3,3,5-trimethylcyclohexan
56,75 g = 0,34 Mol Terephthalsäure
56,75 g = 0,34 Mol Isophthalsäure
308,44 g = 3,02 Mol Essigsäureanhydrid
0,05 g Germaniumdioxid
0,23 g Hydrochinonsulfonsäure-K-Salz

Unter leichtem Stickstoffstrom wurde die Reaktionsmischung mittels Ölbad auf 200 °C aufgeheizt. Im Verlauf von 1 Stunde wurde die Temperatur auf 230 °C erhöht.

Essigsäure destillierte ab. Im Verlauf von weiteren 2 Stunden wurde die Temperatur auf 300 °C gesteigert und weitere Essigsäure abdestilliert. Nach Ablauf von 0,5 Stunden wurde die Essigsäureabspaltung durch Druckerniedrigung auf 12 mbar und Temperaturerhöhung auf 320 °C innerhalb von 1 Stunde zu Ende geführt. Nach dem Abkühlen wurde ein beigefarbener Polyester erhalten (Destillat-Ausbeute: 288,0 g = 96,0 % der Theorie).

Die HDT-A betrug 212 °C.

### Beispiel 2 (Vergleichsbeispiel)

In eine mit Stickstoff gespülte und ausgeheizte Schmelzkondensationsapparatur, bestehend aus einem 1 l-Planschliffgefäß mit Planschliffdeckel, Rührer, Stickstoffeinleitung und Destillationsaufsatz wurden folgende Substanzen eingewogen:

234,87 g = 1,70 Mol p-Hydroxybenzoesäure
67,85 g = 0,36 Mol 4,4′-Dihydroxydiphenyl
83,08 g = 0,36 Mol Bisphenol-A

60,54 g = 0,36 Mol Terephthalsäure
60,54 g = 0,36 Mol Isophthalsäure
328,64 g = 3,21 Mol Essigsäureanhydrid
0,05 g Germaniumdioxid
0,26 g Hydrochinonsulfonsäure-K-Salz

Unter leichtem Stickstoffstrom wurde die Reaktionsmischung mittels Ölbad auf 200 °C aufgeheizt. Im Verlauf von 1 Stunde wurde die Temperatur auf 230 °C erhöht. Essigsäure destillierte ab. Im Verlauf von weiteren 2 Stunden wurde die Temperatur auf 300 °C gesteigert und weitere Essigsäure abdestilliert. Nach Ablauf von 0,5 Stunden wurde die Essigsäureabspaltung durch Druckerniedrigung auf 12 mbar und Temperaturerhöhung auf 320 °C innerhalb von 1 Stunde zu Ende geführt. Nach dem Abkühlen wurde ein beigefarbener Polyester erhalten (Destillat-Ausbeute: 288,0 g = 96,0 % der Theorie).

Die HDT-A betrug 151 °C.

Das Vergleichsbeispiel zeigt, daß Polyester, die Reste der neuen Bisphenole (im Beispiel 1 1,1-Bis(4-hydroxyphenyl)-3,3,5-trimethyl-cyclohexan) einkondensiert enthalten, eine erheblich höhere Wärmeformbeständigkeit aufweisen als vollaromatische thermotrope Polyester, oder thermotrope Polyester, die Reste anderer, vorbeschriebener Bisphenole (im Beispiel 2 2,2-Bis(4-hydroxyphenyl)propan) einkondensiert enthalten.

## Ansprüche

1. Thermotrope, aromatische Polyester mit wiederkehrenden Einheiten der Formeln

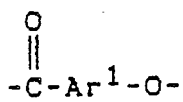 (I),

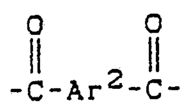 (II),

$-O-Ar^3-O-$ (III)

und

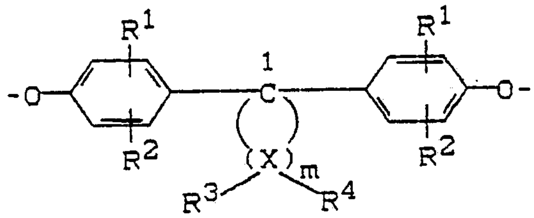 (IV),

worin

$Ar^1$, $Ar^2$ und $Ar^3$ bivalente aromatische Reste mit 6 bis 18 C-Atomen darstellen, wobei diese Reste durch 1 bis 4 $C_1$-$C_4$-Alkylgruppen, 1 bis 4 $C_1$-$C_4$-Alkoxygruppen und/oder durch 1 bis 4 Halogenatome substituiert sein können und

$R^1$ und $R^2$ unabhängig voneinander für Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl stehen,

m eine ganze Zahl von 4 bis 7 darstellt,

$R^3$ und $R^4$ für jedes X individuell wählbar sind und unabhängig voneinander Wasserstoff oder $C_1$-$C_6$-Alkyl bedeuten und

X für Kohlenstoff steht,

mit der Maßgabe, daß mindestens ein Ringkohlenstoffatom gleichzeitig durch zwei $C_1$-$C_6$-Alkylreste substituiert ist, und wobei das Molverhältnis der wiederkehrenden Einheiten (I):(II) 20 bis 85 : 80 bis 15, das Molverhältnis (II): (III) und (IV) 1 bis 0,95 : 1 bis 1,05 und das Molverhältnis (III):(IV) 20 bis 98 : 80 bis 2

beträgt.

2. Thermotrope, aromatische Polyester nach Anspruch 1, dadurch gekennzeichnet, daß das Molverhältnis der wiederkehrenden Einheiten (I):(II) 50 bis 80:20 bis 50 beträgt.

3. Thermotrope, aromatische Polyester nach Ansprüchen 1 und 2, dadurch gekennzeichnet, daß das Molverhältnis der wiederkehrenden Einheiten (II):(III) und (IV) 1 bis 0,98:1 bis 1,02 beträgt.

4. Thermotrope, aromatische Polyester nach Ansprüchen 1 bis 3, dadurch gekennzeichnet, daß das Molverhältnis der wiederkehrenden Einheiten (III):(IV) 25 bis 95:75 bis 5 beträgt.

5. Verwendung der thermotropen, aromatischen Polyester nach Anspruch 1 zur Herstellung von Formkörpern, Filamenten, Fasern und Folien.